# EUROPEAN PATENT APPLICATION

(11) **EP 4 636 853 A1**
(43) Date of publication of application: **22.10.2025**
(21) Application number: 23904031.4
(22) Date of filing: 14.12.2023
(51) Int. Cl.: H01M 4/36, H01M 4/525, H01M 4/505, C01G 53/00, C01G 25/02, H01M 4/131, H01M 10/052, H01M 10/0562, H01M 4/02

(54) **CATHODE ACTIVE MATERIAL FOR ALL-SOLID-STATE BATTERY, MANUFACTURING METHOD THEREFOR, AND ALL-SOLID-STATE BATTERY INCLUDING SAME**

(30) Priority: 16.12.2022 KR 20220177579
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: EUN, Tai Hee, Pohang-si, Gyeongsangbuk-do 37671 (KR); YUN, Jeongsik, Busan 46516 (KR); LEE, Jae Myung, Pohang-si, Gyeongsangbuk-do 37673 (KR); MOON, Ji Woong, Pohang-si, Gyeongsangbuk-do 37673 (KR); PARK, Yooncheol, Pohang-si, Gyeongsangbuk-do 37673 (KR)
(74) Representative: Pfenning, Meinig & Partner mbB
(86) International application number: PCT/KR2023/020666
(87) International publication number: WO 2024/128832

(57) **Abstract**

The present invention relates to a positive electrode active material for an all-solid-state battery, comprising a layered lithium nickel-based transition metal oxide and a coating layer disposed on a surface of the lithium nickel-based transition metal oxide,
wherein the coating layer comprises a lithium zirconium composite oxide and is formed to have a uniform thickness of 5 nm or less over the entire surface of the lithium nickel-based transition metal oxide.

## Description

### [Technical Field]

The present invention relates to a positive electrode active material for an all-solid-state battery, a method for manufacturing the same, and an all-solid-state battery including the same.

### [Background]

Recently, in the lithium battery market, the development of lithium secondary batteries with excellent safety and high gravimetric and volumetric energy densities has become increasingly important due to growing demands for extended driving range and improved safety in electric vehicles. In particular, since electric vehicles require energy capacities on the order of several tens of kilowatt-hours, the risk of large-scale fires and explosions upon battery failure is high. Accordingly, active research is being conducted to replace liquid electrolytes with solid electrolytes.

In particular, all-solid-state batteries adopt a structure in which a solid electrolyte is applied as a secondary electrolyte to form a lithium-ion conduction path within the positive electrode for manufacturing convenience. Among solid electrolytes, sulfide-based solid electrolytes are under extensive study because they exhibit high ionic conductivity and can be easily densified due to their deformability under pressure.

The positive electrode active material used in combination with the sulfide-based solid electrolyte in the positive electrode is typically a layered oxide-based material similar to those used in lithium-ion batteries, particularly a layered NCM or NCA type oxide in which the nickel content is 80% or more. However, such layered positive electrode active materials react with the sulfide-based solid electrolyte to form a high-resistance interfacial layer, which leads to continuous deterioration in battery capacity and cycle life.

### [Disclosure of Invention]

### [Technical Problem]

Accordingly, an object of the present invention is to provide a positive electrode active material for an all-solid-state battery, a method for manufacturing the same, and an all-solid-state battery including the same, which can improve the capacity and cycle life characteristics of the battery by forming a coating layer on the surface of the positive electrode active material.

### [Technical Solution]

According to one embodiment of the present invention, there is provided a positive electrode active material for an all-solid-state battery, comprising a layered lithium nickel-based transition metal oxide and a coating layer disposed on a surface of the lithium nickel-based transitio n metal oxide, wherein the coating layer comprises a lithium zirconium composite oxide and is formed to have a uniform thickness of 5 nm or less over the entire surface of the lithium nickel-based transition metal oxide.

The positive electrode active material for an all-solid-state battery may be a secondary particle formed by aggregation of a plurality of primary particles.

The nickel content in the lithium nickel-based transition metal oxide may be 80 mol% or more based on the total moles of transition metals excluding lithium.

The lithium nickel-based transition metal oxide may be represented by the following Chemical Formula 1:

[Chemical Formula 1] Liₐ[Ni_{b}M_{1-b}]O₂

wherein 0.8 ≤ a ≤ 1.2, 0.80 ≤ b < 1, and M is selected from Mn, Co, Al, Mg, Ti, Nb, W, Sc, Zr, Si, V, Fe, Y, Mo, or combinations thereof.

The lithium zirconium composite oxide may be represented by the following Chemical Formula 2:

[Chemical Formula 2] LiₓZr_{y}O_{z}

wherein 0 < x ≤ 3, 0 < y ≤ 2, and 0 < z ≤ 4.

The lithium zirconium composite oxide may be Li₂ZrO₃.

The content of the coating layer may be from 0.1 wt% to 1.0 wt% based on the total weight of the lithium nickel-based transition metal oxide.

The average particle diameter (D50) of the secondary particle may be from 3 µm to 10 µm.

Another embodiment of the present invention provides a method for manufacturing a positive electrode active material for an all-solid-state battery, comprising:
preparing a transition metal hydroxide containing nickel; forming a mixture comprising the transition metal hydroxide and a lithium raw material; calcining the mixture to form a lithium nickel-based transition metal oxide having a high surface residual lithium concentration; preparing a coating solution containing lithium ions and zirconium ions; spraying the coating solution onto the lithium nickel-based transition metal oxide; and heat-treating the lithium nickel-based transition metal oxide sprayed with the coating solution to form a coating layer, wherein a molar ratio of lithium ions to zirconium ions in the coating solution is less than 2, and the formed coating layer has a thickness of 5 nm or less.

In the step of forming the lithium nickel-based transition metal oxide, the residual lithium concentration may be 8,000 ppm or more.

In the step of forming the lithium nickel-based transition metal oxide, the concentration of LiOH in the residual lithium may be 6,500 ppm or more.

In the step of forming the lithium nickel-based transition metal oxide, the residual lithium may include LiOH and Li₂CO₃, and the amount of LiOH may be 80 wt% or more based on the total residual lithium.

The calcining may be performed at a temperature ranging from 700°C to 750°C.

The calcining may be performed under an oxygen atmosphere having a concentration of 99% or more.

In the step of preparing the coating solution, the molar ratio of lithium ions to zirconium ions may be 1.8 or less.

In the step of spraying the coating solution, an amount of the sprayed coating solution may be from 20 wt% to 40 wt% based on the total weight of the lithium nickel-based transition metal oxide.

A spraying rate of the coating solution may be from 3 g/min to 15 g/min.

The heat treatment may be performed at a temperature ranging from 250°C to 350°C. The heat treatment may be performed for a duration of 1 hour to 3 hours.

Another embodiment of the present invention provides a positive electrode comprising the above-described positive electrode active material for an all-solid-state battery.

Still another embodiment of the present invention provides an all-solid-state battery comprising a positive electrode, a negative electrode, and a solid electrolyte layer interposed therebetween, wherein the positive electrode comprises the above-described positive electrode active material for an all-solid-state battery.

### [Advantageous Effects of the Invention]

According to one embodiment of the present invention, the positive electrode active material for an all-solid-state battery includes a lithium zirconium composite oxide coating layer that is thin and uniformly formed on the surface, thereby improving the capacity and cycle life characteristics of the battery.

According to another embodiment of the present invention, the method for manufacturing a positive electrode active material for an all-solid-state battery enables the formation of a lithium zirconium composite oxide coating layer having a thin and uniform thickness by first forming a lithium nickel-based transition metal oxide in which a relatively high level of residual lithium remains, and then spraying and heat-treating a coating solution in which the molar ratio of lithium ions to zirconium ions is appropriately controlled.

### [Brief Description of the Drawings]

FIG. 1 is a schematic view of a positive electrode active material for an all-solid-state battery according to one embodiment of the present invention.
FIGS. 2 to 3 are SEM images of the positive electrode active material prepared according to Example 1.
FIGS. 4 to 7 are TEM cross-sectional images of the positive electrode active material prepared according to Example 1.
FIGS. 8 to 11 are TEM cross-sectional images of the positive electrode active material prepared according to Comparative Example 4.
FIG. 12 is a graph showing weight loss measured during TGA (Thermogravimetric Analysis) performed in Experimental Example 2.
FIG. 13 is a graph showing the amount of H₂O gas generated during TGA analysis in Experimental Example 2.
FIG. 14 is a graph showing the amount of CO₂ gas generated during TGA analysis in Experimental Example 2.

### [Mode for Invention]

The terms such as "first," "second," and "third" are used herein to describe various parts, components, regions, layers, and/or sections, but are not limited thereto. These terms are merely used to distinguish one part, component, region, layer, or section from another. Therefore, a "first" part, component, region, layer, or section described below may be referred to as a "second" part, component, region, layer, or section without departing from the scope of the present invention.

The technical terms used herein are intended only to describe particular embodiments and are not intended to limit the scope of the invention. As used herein, the singular forms include the plural forms as well, unless the context clearly indicates otherwise. The term "comprise" or "comprising," as used in the specification, specifies the presence of stated features, regions, integers, steps, operations, elements, and/or components but does not preclude the presence or addition of one or more other features, regions, integers, steps, operations, elements, components, and/or groups thereof.

When a part is described as being "on" or "above" another part, it may be directly on or above the other part, or intervening parts may also be present therebetween. In contrast, when a part is described as being "directly on" another part, it means that there is no intervening part between them.

Unless otherwise defined, all technical and scientific terms used herein have the same meaning as commonly understood by one of ordinary skill in the art to which this invention belongs. Commonly used terms defined in standard dictionaries should be interpreted in accordance with their meanings in the context of the relevant art and the present disclosure, and not in an idealized or overly formal sense unless explicitly defined otherwise.

Further, unless otherwise specified, "%" refers to weight percent, and 1 ppm corresponds to 0.0001 weight percent.

As used in this specification, the expression "combinations thereof" in a Markush-type claim refers to any mixture or combination of one or more elements selected from the group consisting of the components listed in the Markush group. It is to be interpreted as including at least one of the listed components.

Hereinafter, embodiments of the present invention will be described in detail so that those skilled in the art can readily carry out the invention. However, the present invention may be embodied in many different forms and should not be construed as being limited to the embodiments set forth herein.

### 1. Positive Electrode Active Material for All-Solid-State Battery

Sulfide-based solid electrolytes are widely used as solid electrolytes for all-solid-state batteries. Conventional layered structure positive electrode active materials, such as NCM or NCA types, which are widely used, tend to form high-resistance interfacial layers upon contact with sulfide-based solid electrolytes due to lithium depletion caused by diffusion of metal elements. These high-resistance layers significantly deteriorate the cycle performance and rate capability of the battery. That is, conventional sulfide-based solid electrolytes can cause performance degradation by inducing side reactions with the positive electrode.

To address this, the inventors of the present invention have investigated a positive electrode active material for all-solid-state batteries having a lithium-ion-conductive oxide coating layer on the surface of the active material, to suppress the formation of high-resistance layers resulting from side reactions between the positive electrode and the sulfide-based solid electrolyte.

In particular, to effectively suppress the formation of high-resistance layers, the coating layer must be uniformly formed over the entire surface of the positive electrode active material at a thickness of only a few nanometers, necessitating a precise coating method. Through extensive research, the inventors have developed a method capable of forming a coating layer with a thin and uniform thickness of several nanometers over the entire surface of the active material, thereby completing the present invention.

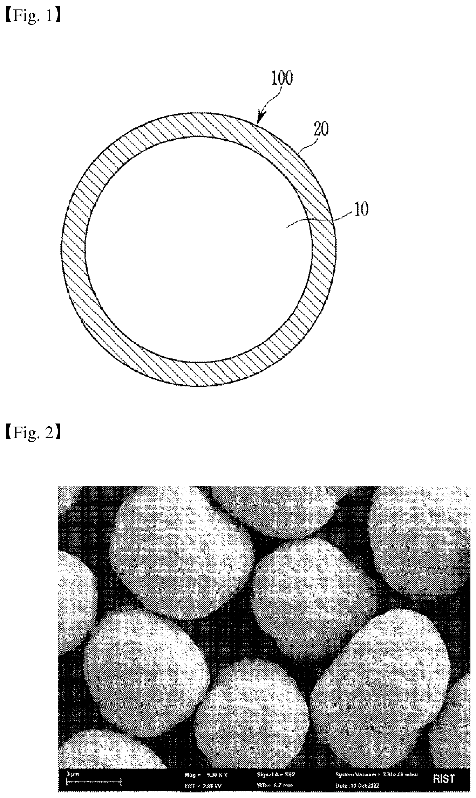

FIG. 1 is a schematic view of a positive electrode active material 100 for an all-solid-state battery according to one embodiment of the present invention.

Referring to FIG. 1, the positive electrode active material 100 according to one embodiment of the present invention comprises a layered lithium nickel-based transition metal oxide 10 and a coating layer 20 disposed on the surface of the lithium nickel-based transition metal oxide. The coating layer 20 comprises a lithium zirconium composite oxide and is formed to have a uniform thickness of 5 nm or less over the entire surface of the lithium nickel-based transition metal oxide.

The positive electrode active material for an all-solid-state battery according to one embodiment of the present invention may have the form of a secondary particle formed by aggregation of a plurality of primary particles.

The nickel content of the lithium nickel-based transition metal oxide may be 80 mol% or more based on the total moles of transition metals excluding lithium. Thus, a sufficient amount of nickel can be secured to achieve high capacity in the battery. However, as the nickel content increases, the risk of high-resistance layer formation also increases. The active material of the present invention can prevent this through a thin and uniformly formed coating layer over the entire surface of the active material.

More specifically, the lithium nickel-based transition metal oxide may be represented by the following Chemical Formula 1:

[Chemical Formula 1] Liₐ[Ni_{b}M_{1-b}]O₂

wherein 0.8 ≤ a ≤ 1.2, 0.80 ≤ b < 1, and M is Mn, Co, Al, Ti, Nb, W, Sc, Zr, Si, V, Fe, Y, Mo, or combinations thereof.

In the lithium nickel-based transition metal oxide of Chemical Formula 1, lithium may be present in an amount corresponding to "a," i.e., from 0.8 to 1.2. If "a" is too small, the capacity may decrease; if it is too large, the strength of the calcined active material may increase, making it difficult to pulverize, and the amount of lithium by-products may increase, leading to increased gas generation. Considering the effect of lithium content control on improving the capacity characteristics and sinterability balance during manufacturing, lithium is preferably present in an amount from 0.9 to 1.1.

Nickel may be present in an amount corresponding to "b," i.e., from 0.80 to less than 1. A nickel content of 0.80 or more ensures sufficient contribution to charge/discharge and promotes high capacity.

"M" refers to transition metals excluding lithium and nickel, and includes Mn, Co, Al, Mg, Ti, Nb, W, Sc, Zr, Si, V, Fe, Y, Mo, or combinations thereof. More specifically, M may include Mn and optionally one or more selected from Co, Al, Ti, Nb, W, Sc, Zr, Si, V, Fe, Y, and Mo.

The lithium nickel-based transition metal oxide may be, for example, an NCM-type or NCA-type oxide, but is not limited thereto.

The positive electrode active material according to one embodiment of the present invention includes a coating layer 20 formed uniformly over the entire surface of the secondary particle at a thickness of 5 nm or less, and the coating layer comprises a lithium zirconium composite oxide. More specifically, the coating layer thickness may be 4.5 nm or less and 3 nm or more.

As the coating layer 20 is formed thinly and uniformly over the entire surface of the secondary particle, the surface morphology of the positive electrode active material can be effectively controlled to reduce interfacial resistance with the sulfide-based solid electrolyte, thereby effectively suppressing the formation of high-resistance layers. As a result, the capacity and cycle life characteristics of the battery can be improved.

The shape and thickness of the coating layer can be observed, for example, through scanning electron microscopy (SEM) and transmission electron microscopy (TEM) of the positive electrode active material or its cross section.

Such a thin and uniform coating layer can be readily obtained by controlling the calcination conditions to achieve a high residual lithium concentration in the transition metal oxide and adjusting the Li:Zr molar ratio in the coating solution, as described later.

The lithium zirconium composite oxide may be represented by the following Chemical Formula 2:

[Chemical Formula 2] LiₓZr_{y}O_{z}

wherein 0 < x ≤ 3, 0 < y ≤ 2, and 0 < z ≤ 4.

The lithium zirconium composite oxide may be, for example, Li₂ZrO₃, but is not limited thereto.

The content of the coating layer may be from 0.1 wt% to 1.0 wt% based on the total weight of the lithium nickel-based transition metal oxide. When the content of the coating layer satisfies this range, it can effectively suppress the formation of high-resistance layers and improve the capacity and cycle life characteristics of the battery.

The average particle diameter (D50) of the secondary particle may be from 3 µm to 10 µm.

As used herein, "average particle diameter (D50)" refers to the diameter at which 50% of the cumulative volume in a particle size distribution curve is reached. The D50 may be measured using, for example, the laser diffraction method.

When the average particle diameter of the secondary particle is within the above range, the battery performance can be more favorably achieved.

### 2. Method for Manufacturing Positive Electrode Active Material for All-Solid-State Battery

The inventors of the present invention have studied a coating method for forming a coating layer thinly and uniformly over the entire surface of the active material to suppress the formation of a high-resistance layer.

A lithium transition metal oxide can be prepared by mixing a transition metal hydroxide precursor with a lithium raw material and performing calcination. During this process, residual lithium generally remains on the surface of the oxide. Such residual lithium typically includes lithium hydroxide and lithium carbonate, which are known to deteriorate battery performance. In particular, to control the amount of lithium hydroxide among the residual lithium, the Li/metal (transition metal) ratio, the calcination temperature, and the oxygen supply amount during calcination are adjusted.

The method for manufacturing a positive electrode active material according to the present invention involves utilizing the residual lithium as a reactant for forming a coating layer. By reacting the residual lithium, particularly lithium hydroxide-which deteriorates battery performance-with a precursor material for the coating layer to form a lithium zirconium composite oxide coating layer, the residual lithium can be efficiently removed while simultaneously forming a coating layer that suppresses the formation of a high-resistance layer.

Additionally, a spray coating method using a fluidized bed coating apparatus and subsequent heat treatment can be employed to form the coating layer. Through such a method, the coating can be applied thinly and uniformly across the entire surface of the active material.

More specifically, another embodiment of the present invention provides a method for manufacturing a positive electrode active material for an all-solid-state battery, comprising:
preparing a transition metal hydroxide containing nickel;
forming a mixture comprising the transition metal hydroxide and a lithium raw material;
forming a lithium nickel transition metal oxide having a controlled high surface concentration of residual lithium by calcining the mixture;
preparing a coating solution comprising lithium ions and zirconium ions;
spraying the coating solution onto the lithium nickel transition metal oxide; and
heat-treating the lithium nickel transition metal oxide sprayed with the coating solution to form a coating layer,
wherein in the step of preparing the coating solution, the molar ratio of lithium ions to zirconium ions (Li/Zr) is less than 2, and
the thickness of the formed coating layer is 5 nm or less.

Hereinafter, the method for manufacturing the positive electrode active material for an all-solid-state battery according to another embodiment of the present invention will be described step by step in detail.

First, a transition metal hydroxide containing nickel is prepared. The transition metal hydroxide serves as a precursor for a positive electrode active material.

At this time, a doping element may optionally be doped during the preparation of the precursor for the positive electrode active material.

For example, the transition metal hydroxide may be prepared by a co-precipitation reaction in which an ammonia solution and a caustic soda solution are added to a transition metal-containing solution comprising a nickel raw material, a manganese raw material, and optionally a doping raw material including one or more selected from Co, Al, Mg, Ti, Nb, W, Sc, Zr, Si, V, Fe, Y, and Mo.

The nickel raw material is not particularly limited as long as it is commonly used in the preparation of precursors for positive electrode active materials in the art. For instance, the nickel raw material may include nickel-containing sulfates, acetates, nitrates, halides, sulfides, hydroxides, oxides, or oxyhydroxides, and more specifically, may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, nickel salts of fatty acids, nickel halides, or combinations thereof, but is not limited thereto.

The manganese raw material is also not particularly limited as long as it is commonly used in the preparation of precursors for positive electrode active materials. For example, the manganese raw material may include manganese-containing sulfates, acetates, nitrates, halides, sulfides, hydroxides, oxides, oxyhydroxides, or combinations thereof. More specifically, it may be MnSO₄, MnCO₃, Mn(NO₃)₂, manganese acetate, manganese dicarboxylates, manganese citrate, manganese salts of fatty acids, manganese oxides such as Mn₂O₃, MnO₂, and Mn₃O₄, manganese oxyhydroxides, manganese chlorides, or combinations thereof, but is not limited thereto.

The ammonia solution serves as a complexing agent and may include, for example, NH₃, NH₄OH, (NH₄)₂SO₄, NH₄NO₃, NH₄Cl, CH₃COONH₄, NH₄CO₃, or combinations thereof, but is not limited thereto. The ammonia solution may be used in aqueous form, wherein the solvent may be water or a mixture of water and an organic solvent miscible with water (specifically, alcohols, etc.).

The caustic soda solution serves as a precipitating agent or a pH adjuster, and may include alkaline compounds such as hydroxides or hydrates of alkali metals or alkaline earth metals including NaOH, KOH, or Ca(OH)₂, or combinations thereof. The caustic soda solution may also be used in aqueous form, wherein the solvent may be water or a mixture of water and an organic solvent miscible with water (specifically, alcohols, etc.).

The co-precipitation reaction may be performed under an inert atmosphere such as nitrogen or argon.

During the co-precipitation reaction, the temperature in the reactor may be from 30°C to 70°C, more specifically from 40°C to 60°C, and even more specifically from 45°C to 55°C.

Through the above-described process, particles of nickel-manganese-(doping element) hydroxide are formed and precipitated in the reaction solution. The precipitated precursor particles may be separated by a conventional method and dried to obtain a precursor. In this case, the precursor may be a secondary particle formed by the aggregation of primary particles.

Next, a mixture comprising the transition metal hydroxide and a lithium raw material is formed.

At this time, the mixture may further include a doping raw material comprising one or more selected from Co, Al, Mg, Ti, Nb, W, Sc, Zr, Si, V, Fe, Y, and Mo.

The lithium raw material may include lithium-containing sulfates, nitrates, acetates, carbonates, oxalates, citrates, halides, hydroxides, or oxyhydroxides, and is not particularly limited as long as it is soluble in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or combinations thereof, but is not limited thereto.

In particular, the molar ratio of the transition metal hydroxide to the lithium raw material may be from 1:1.03 to 1:1.07. When the molar ratio of the transition metal hydroxide to the lithium raw material falls within the above range, a relatively high concentration of residual lithium may be formed to facilitate the formation of a coating layer.

Next, the mixture is subjected to calcination to form a lithium nickel transition metal oxide in which the surface residual lithium concentration is controlled to a high level.

More specifically, the concentration of the residual lithium may be 8,000 ppm or more, and more specifically, may be 8,000 or 8,200 ppm or more and 10,000 or 9,000 ppm or less.

The concentration of LiOH among the residual lithium may be 6,500 ppm or more, and more specifically may be 6,700 or 6,900 ppm or more.

Further, the residual lithium may include LiOH and Li₂CO₃, and the amount of LiOH may be 80 wt% or more, and more specifically 81 wt% or 82 wt% or more, based on the total amount of the residual lithium.

At this time, the calcination may be performed at a temperature of 700°C to 750°C. When the calcination temperature falls within the above range, a relatively high concentration of residual lithium may be formed to facilitate the formation of a coating layer.

In addition, the calcination may be performed under an oxygen atmosphere having a concentration of 99% or more. When the atmosphere during calcination satisfies the above condition, a relatively high concentration of residual lithium may be formed to facilitate the formation of a coating layer.

Furthermore, the calcination may be performed for 5 to 20 hours, more specifically for 5 to 15 hours, or 8 to 12 hours.

Accordingly, a lithium nickel transition metal oxide in which the surface residual lithium concentration is controlled as described above can be easily formed. When the residual lithium concentration satisfies the above range, the coating layer can be more easily formed. More specifically, if the residual lithium concentration is too low, the amount of residual lithium available for reaction to form the coating layer is insufficient, which may result in a thin coating layer. On the other hand, if the residual lithium concentration is too high, although the coating layer may be readily formed, the unreacted residual lithium may remain, which can deteriorate battery performance.

In particular, the content of LiOH in the surface residual lithium of the lithium nickel transition metal oxide may be 80 wt% or more, and more specifically 82 wt% or more. Since LiOH is the reactive species for forming the coating layer among the residual lithium components, when the content of LiOH in the residual lithium satisfies the above range, the coating layer can be more readily formed.

Next, a coating solution containing lithium ions and zirconium ions is prepared.

At this time, the molar ratio of lithium ions to zirconium ions (Li/Zr) may be less than 2, and more specifically, 1.8 or 1.5 or less. When the molar ratio of lithium ions to zirconium ions satisfies the above range, the lithium ions can react stoichiometrically and readily with LiOH in the residual lithium to form a lithium zirconium composite oxide coating layer.

The coating solution containing lithium ions and zirconium ions may be prepared, for example, by dissolving lithium in dehydrated ethanol and then adding zirconium(IV) tetrapropoxide (70 wt% in 1-propanol), followed by stirring.

Next, the coating solution is sprayed onto the lithium nickel transition metal oxide. When the coating is applied by spraying the coating solution and subsequently performing heat treatment as described below, a thin and uniform coating layer can be formed over the entire surface of the active material.

The spraying may be performed using, for example, a fluidized coating apparatus.

The amount of the sprayed coating solution may be from 20 wt% to 40 wt% based on the total weight of the lithium nickel transition metal oxide. When the amount of the sprayed coating solution satisfies the above range, the weight ratio of the coating layer to the active material can be appropriately controlled to maximize improvement in battery performance.

The spraying rate of the coating solution may be from 3 to 15 g/min. If the spraying rate is too slow, the process time increases and production efficiency decreases. On the other hand, if the spraying rate is too fast, agglomeration through necking between active material particles may occur, which may hinder the formation of the coating layer.

Next, the lithium nickel transition metal oxide onto which the coating solution has been sprayed is subjected to heat treatment to form the coating layer.

The heat treatment may be performed at a temperature of 250°C to 350°C. If the heat treatment temperature is too low, organic residues may remain. If the heat treatment temperature is too high, the coating layer may become crystallized, which can increase resistance and degrade the capacity of the positive electrode material.

The heat treatment may be performed for 1 to 3 hours. If the heat treatment time is too short, organic residues may remain. If the heat treatment time is too long, crystallization of the coating layer may proceed excessively, which may hinder formation of the coating layer.

The heat treatment may be performed under an oxygen atmosphere.

### 3. Positive Electrode and All-Solid-State Battery

Another embodiment of the present invention provides a positive electrode comprising the above-described positive electrode active material for an all-solid-state battery.

More specifically, the positive electrode may include a positive electrode current collector and a positive electrode active material layer disposed on the positive electrode current collector, wherein the positive electrode active material layer may comprise the above-described positive electrode active material for an all-solid-state battery, a sulfide-based solid electrolyte, and a conductive material. The positive electrode active material layer may further include a binder.

The sulfide-based solid electrolyte may be, for example, a sulfide-based solid electrolyte having an argyrodite-type crystal structure.

The sulfide-based solid electrolyte having an argyrodite-type crystal structure may include, for example, Li₆PS₅Cl, Li₆PS₅Br, Li₆PS₅I, or combinations thereof, but is not limited thereto.

The sulfide-based solid electrolyte of the argyrodite-type crystal structure may be doped with a doping element in at least part of its crystal structure.

The conductive material may be, for example, graphite, carbon black, acetylene black, Ketjen black, carbon nanofibers, carbon nanotubes, or combinations thereof.

The binder may be, for example, polyvinylidene fluoride, styrene-butadiene rubber (SBR), polytetrafluoroethylene, polyvinyl fluoride, vinylidene fluoride/hexafluoropropylene copolymer, polyacrylonitrile, polymethyl methacrylate, or combinations thereof.

The positive electrode active material layer may further include additives such as fillers, coating agents, dispersants, and ionic conductivity enhancers, in addition to the above-described positive electrode active material, solid electrolyte, binder, and conductive material.

Another embodiment of the present invention provides an all-solid-state battery comprising a positive electrode, a negative electrode, and a solid electrolyte layer disposed therebetween, wherein the positive electrode includes the above-described positive electrode active material for an all-solid-state battery.

The description of the positive electrode is as described above and is omitted here.

The solid electrolyte layer may include a sulfide-based solid electrolyte.

The sulfide-based solid electrolyte may be an argyrodite-type compound comprising one or more selected from Li₇₋ₓPS₆₋ₓClₓ (0 ≤ x ≤ 2), Li₇₋ₓPS₆₋ₓBrₓ (0 ≤ x ≤ 2), and Li₇₋ₓPS₆₋ₓIₓ (0 ≤ x ≤ 2). In particular, the sulfide-based solid electrolyte may be an argyrodite-type compound comprising one or more selected from Li₆PS₃Cl, Li₆PS₅Br, and Li₆PS₅I, but is not limited thereto. The sulfide-based solid electrolyte may be doped with a doping element in at least part of the crystal structure of the above-described argyrodite-type compound.

The solid electrolyte layer may further include a binder. The binder included in the solid electrolyte layer may be, for example, styrene-butadiene rubber (SBR), polytetrafluoroethylene, polyvinyl fluoride, polyethylene, or the like, but is not limited thereto, and any binder commonly used in the relevant technical field may be employed. The binder of the solid electrolyte layer may be the same as or different from the binder included in the positive electrode active material layer and the negative electrode active material layer.

The negative electrode may include a negative electrode current collector and a negative electrode active material layer disposed on the negative electrode current collector, wherein the negative electrode active material layer may include a negative electrode active material.

The negative electrode active material may include a material capable of reversibly intercalating and deintercalating lithium ions, lithium metal, a lithium metal alloy, a lithium doping/de-doping material, or a transition metal oxide.

The material capable of reversibly intercalating and deintercalating lithium ions may be a carbon material. Any carbon-based negative electrode active material commonly used in lithium ion secondary batteries may be used. Representative examples include crystalline carbon, amorphous carbon, or mixtures thereof.

Examples of the crystalline carbon include graphite such as amorphous, plate-shaped, flake, spherical, or fibrous natural or artificial graphite. Examples of the amorphous carbon include soft carbon (low-temperature calcined carbon), hard carbon, mesophase pitch carbon, calcined coke, and the like.

The lithium metal alloy may be an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The lithium doping/de-doping material may include Si, SiOₓ (0 < x < 2), Si-Y alloys (where Y is an element selected from the group consisting of alkali metals, alkaline earth metals, group 13 elements, group 14 elements, transition metals, rare earth elements, and combinations thereof, excluding Si), Sn, SnO₂, Sn-Y (where Y is defined as above, excluding Sn), or mixtures thereof with SiO₂.

The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof. The transition metal oxide may include, for example, vanadium oxide or lithium vanadium oxide. The negative electrode active material layer may also include a binder and optionally a conductive material.

The binder serves to bind the negative electrode active material particles to each other and to the current collector. Representative examples include polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resins, nylon, and the like, but are not limited thereto.

The conductive material is used to impart conductivity to the electrode and may be any electronically conductive material that does not cause chemical changes in the battery. Examples include carbon-based materials such as natural graphite, artificial graphite, carbon black, acetylene black, Ketjen black, carbon fibers; metallic materials such as copper, nickel, aluminum, and silver in the form of powders or fibers; conductive polymer materials such as polyphenylene derivatives; or mixtures thereof.

The current collector may be selected from the group consisting of copper foil, nickel foil, stainless steel foil, titanium foil, nickel foam, copper foam, a polymer substrate coated with a conductive metal, and combinations thereof.

Hereinafter, embodiments of the present invention will be described in greater detail through examples. However, the following examples are merely preferred embodiments of the present invention and are not intended to limit the present invention thereto.

### Example 1

### (1) Preparation of Positive Electrode Active Material

### (Formation of Lithium Transition Metal Oxide)

A mixture was prepared by mixing a transition metal hydroxide precursor having a composition of Ni_{0.8}Co_{0.12}Mn_{0.08}(OH)₂ with a lithium raw material, LiOH·H₂O, at a molar ratio of 1:1.05. As the secondary particles, a hydroxide precursor having an average particle diameter (D50) of 7 µm was used.

1 kg of the mixture was charged into a tubular furnace and heated at a rate of 2.5°C/min. Calcination was conducted at 730°C for 10 hours, followed by cooling at a rate of 2.5°C/min. During calcination, pure O₂ was supplied to maintain an oxygen concentration of 99% or higher, thereby forming 1 kg of lithium transition metal oxide, LiNi_{0.8}Co_{0.12}Mn_{0.08}O₂.

### (Preparation of Coating Solution)

Subsequently, lithium was dissolved in dehydrated ethanol, and zirconium(IV) tetrapropoxide (70 wt.% in 1-propanol) was added in an amount such that the molar ratio of lithium ions to zirconium ions was 1:1. The solution was stirred to prepare a coating solution containing lithium ions and zirconium ions.

### (Spraying of Coating Solution)

Using a fluidized bed coating device (MP-01, POWREX), 300 g of the coating solution was sprayed onto 1 kg of the prepared lithium transition metal oxide. Operating conditions of the coating device were as follows: intake gas (nitrogen), intake gas temperature (80°C), intake flow rate (0.3 m³/h), rotation speed (400 rpm), and spray rate of the coating solution (10 g/min).

### (Heat Treatment)

Thereafter, heat treatment was performed at 300°C for 2 hours under an oxygen atmosphere to form a Li₂ZrO₃ coating layer on the surface of the lithium transition metal oxide. The average particle diameter (D50) of the resulting positive electrode active material was 7.9 µm, and the content of the coating layer was from 0.4 wt% to 1.0 wt% based on the total weight of the lithium transition metal oxide.

### (2) Preparation of Lithium Secondary Battery

The prepared positive electrode active material (75 wt%) was mixed with an argyrodite-type solid electrolyte (Li₆PS₃Cl, 22 wt%) and a conductive material (Super C65, 3 wt%) along with a small amount of binder dissolved in solvent to form a mixed paste.

The paste was used to fabricate an electrode sheet, which was then dried to obtain a composite positive electrode.

For cell assembly, a predetermined amount of Li₆PS₅Cl was loaded into a solid-state battery jig to serve as a separator, compressed to a thickness of approximately 100 µm at 300 MPa or more, and then the positive electrode sheet was added and subjected to secondary compression to fabricate the positive electrode portion.

Subsequently, a Li-In alloy was placed on the opposite side and compressed appropriately to fabricate a solid-state battery for evaluation.

### Comparative Example 1

A positive electrode active material and lithium secondary battery having an average particle diameter (D50) of 7.9 µm were prepared in the same manner as in Example 1, except that the coating solution was prepared at a lithium ion:zirconium ion molar ratio of 2:1.

### Comparative Example 2

A positive electrode active material and lithium secondary battery having an average particle diameter (D50) of 7.9 µm were prepared in the same manner as in Example 1, except that: (i) the coating solution was prepared at a lithium ion:zirconium ion molar ratio of 2:1; and (ii) instead of spraying and heat-treating the coating solution, the lithium transition metal oxide was immersed in the coating solution, stirred for 30 minutes, and then vacuum-dried to form the coating layer.

### Comparative Example 3

A positive electrode active material and lithium secondary battery having an average particle diameter (D50) of 7.9 µm were prepared in the same manner as in Example 1, except that no coating layer was formed (i.e., coating solution preparation, spraying, and heat treatment were omitted).

### Comparative Example 4

A positive electrode active material and lithium secondary battery were prepared in the same manner as in Example 1, except that the molar ratio of the transition metal hydroxide precursor to the lithium raw material for forming the lithium transition metal oxide was 1:1.01.

Table 1 below summarizes the amount of residual lithium remaining on the surface of the lithium transition metal oxide before coating, and the coating conditions used in Example 1 and Comparative Examples 1 to 4.

**[Table 1]**

| | Residual lithium (ppm) | | | | Coating | |
|---|---|---|---|---|---|---|
| | LiOH | Li2CO3 | Total | LiOH (wt%) | Coating method | Li:Zr mol ratio |
| Example 1 | 6,942 | 1,469 | 8,410 | 82.5% | Fluidized Bed Coating | 1:1 |
| Comparative Example 1 | 6,942 | 1,469 | 8,410 | 82.5% | Fluidized Bed Coating | 2:1 |
| Comparative Example 2 | 6,055 | 1,430 | 7,486 | 80.9% | Vacuum Drying | 2:1 |
| Comparative Example 3 | 6,130 | 1,622 | 7,752 | 79.1% | - | - |
| Comparative Example 4 | 3,150 | 1,830 | 4,980 | 63.2% | Fluidized Bed Coating | 1:1 |

### Experimental Example 1: Analysis of SEM-EDX and TEM Images of the Active Material

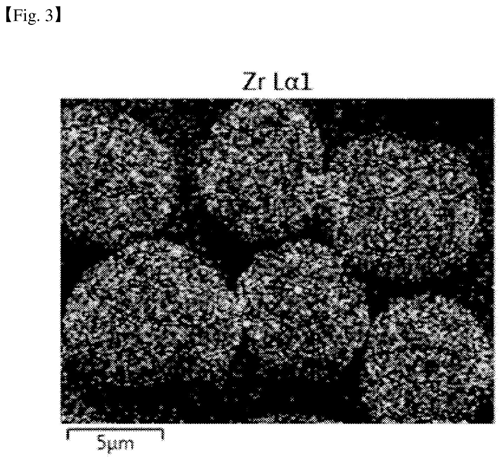

Scanning electron microscopy (SEM) images of the positive electrode active material prepared in accordance with Example 1 were obtained, and the results are shown in FIGS. 2 and 3.

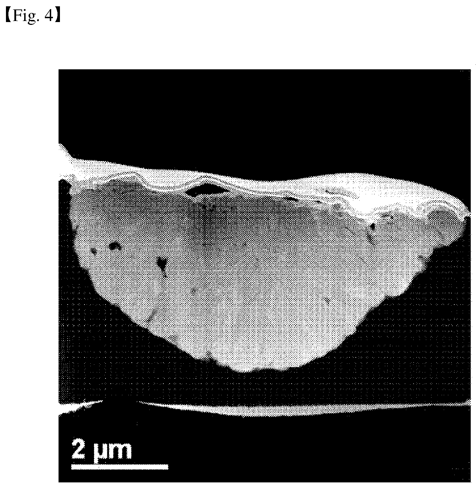

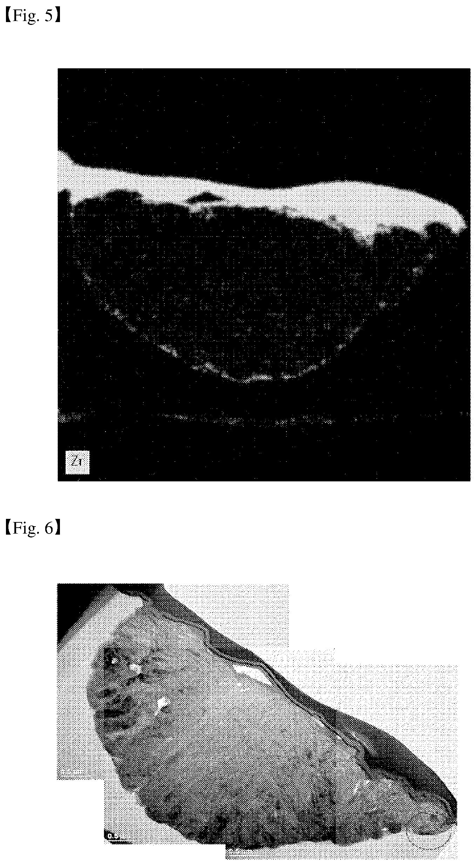

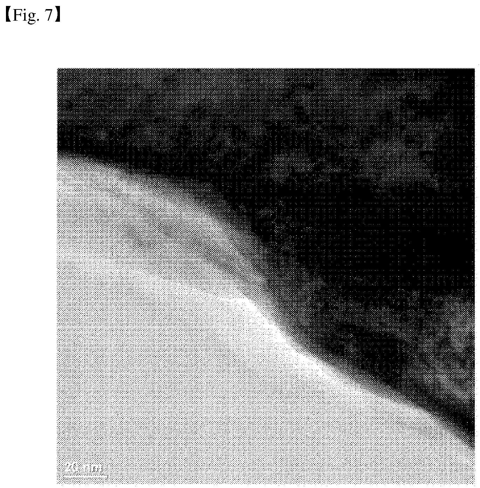

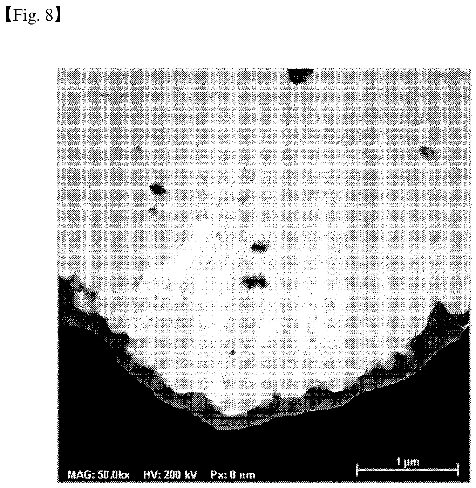

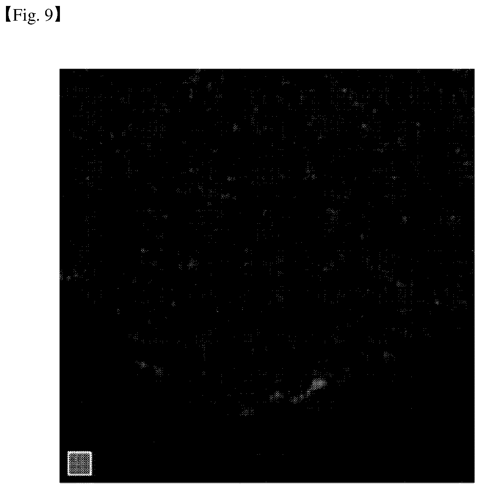

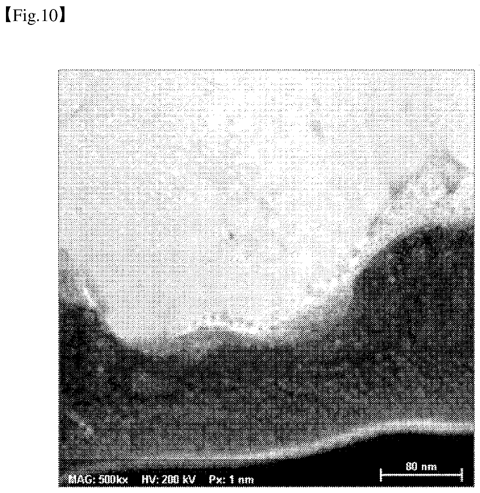

Transmission electron microscopy (TEM) images of cross-sections of the positive electrode active materials prepared in accordance with Example 1 and Comparative Example 4 were obtained, and the results are shown in FIGS. 4 to 7 (Example 1) and FIGS. 8 to 11 (Comparative Example 4).

Furthermore, SEM-EDX images of the positive electrode active materials prepared in accordance with Example 1 and Comparative Examples 1 to 4 were analyzed to evaluate the thickness and uniformity of the coating layer, and the results are shown in Table 2 below.

Referring to FIG. 2, the positive electrode active material of Example 1 exhibits a structure in which primary particles are aggregated to form secondary particles, and it was confirmed that a Zr-containing coating layer was uniformly formed over the entire surface of the active material particles.

**[Table 2]**

| | Coating layer thickness | Coating layer uniformity |
|---|---|---|
| Example 1 | About 4nm or less | uniform |
| Comparative Example 1 | About 2 ~ 20 nm | non-uniform |
| Comparative Example 2 | About 5 ~ 20 nm | non-uniform |
| Comparative Example 3 | - | - |
| Comparative Example 4 | About 0 ~ 50 nm | non-uniform |

Referring to FIGS. 2 to 11 and Table 2, it was confirmed that in the case of Example 1, a Zr-containing coating layer was formed over the entire surface of the positive electrode active material, with a very thin and uniform thickness of 5 nm or less.

In contrast, in Comparative Examples 1 to 4, the coating layer was observed to be relatively thick, and the coating thickness uniformity was significantly poor.

### Experimental Example 2: Thermogravimetric Analysis (TGA) of the Coating Layer During Formation

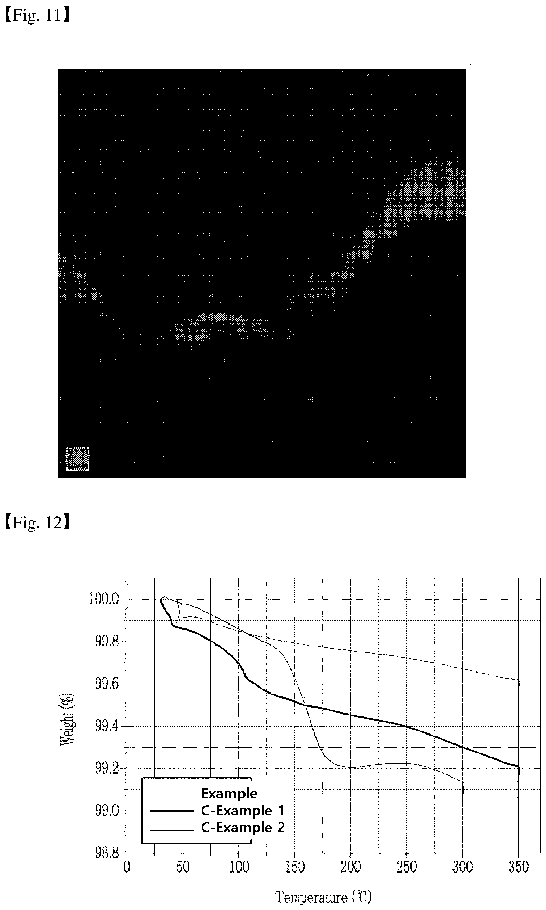

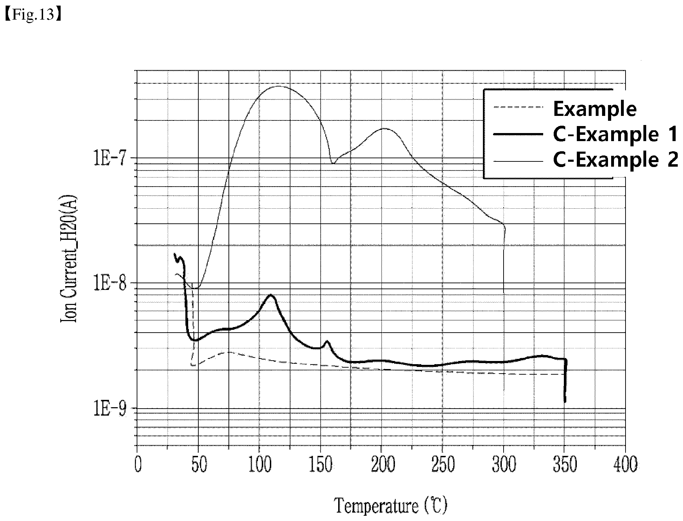

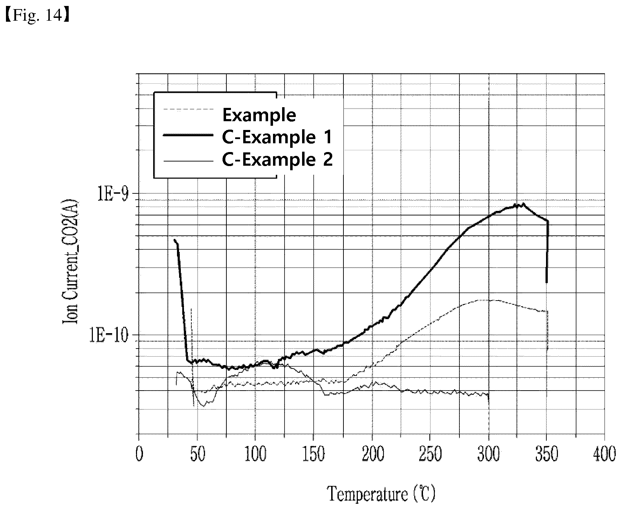

In the process of forming the coating layer of the positive electrode active materials prepared in accordance with Example 1 and Comparative Examples 1 and 2, thermogravimetric analysis (TGA) was conducted to evaluate the weight loss and the evolution of H₂O and CO₂ gases. The results are shown in Table 3 and FIGS. 12 to 14. The specific measurement methods are described below.

### (1) Evaluation of Weight Loss

Using a simultaneous differential thermal and thermogravimetric analyzer (TGA), weight loss was measured as a function of temperature from room temperature to 350°C at a heating rate of 2°C/min under a flowing oxygen gas atmosphere.

### (2) Evaluation of H₂O and CO₂ Gas Evolution

During the temperature increase from room temperature to 350°C, the evolved gases were analyzed by mass spectrometry (MS) coupled to the TGA to detect H₂O and CO₂ species.

**[Table 3]**

| Category | Weight loss (%) | | | | Notes |
|---|---|---|---|---|---|
| | 40°C | ~110°C | ~350°C | Total | |
| Example 1 | 0.08 | 0.09 | 0.27 | 0.44 | Exhibited a low total weight loss |
| Comparative Example 1 | 0.12 | 0.27 | 0.55 | 0.94 | The weight loss was primarily attributed to the evolution of CO₂ gas |
| Comparative Example 2 | 0 | 0.80 | 0.19 | 0.99 | The weight loss was primarily attributed to the evolution of H₂O gas |

Referring to Table 3 and FIGS. 12 to 14, it was confirmed that the positive electrode active material of Example 1 exhibited a low total weight loss, and in particular, the amount of evolved H₂O gas was significantly reduced.

In contrast, Comparative Example 1 exhibited a large weight loss, which was primarily attributed to the evolution of CO₂ gas at high temperatures. Comparative Example 2 also showed a large weight loss, mainly due to the evolution of H₂O gas.

The H₂O and CO₂ gases are considered to originate from unreacted LiOH remaining on the surface.

Therefore, in the case of Example 1, it can be interpreted that the amount of residual lithium, the weight ratio of LiOH among the residual lithium, the fluidized bed coating method, and the Li:Zr molar ratio in the coating solution were all appropriately controlled, which allowed the surface LiOH to sufficiently participate in the formation of the coating layer on the lithium transition metal oxide.

### Experimental Example 3: Electrochemical Performance Evaluation of Lithium Secondary Batteries

Electrochemical performance evaluation tests were conducted for the lithium secondary batteries fabricated in accordance with Example 1 and Comparative Examples 1 to 3. The results are shown in Table 4 below. The specific experimental methods are described as follows.

### (1) Evaluation of Initial Capacity and Efficiency

The fabricated all-solid-state battery cells were mounted on a charge/discharge tester, and charge/discharge performance was evaluated at 30°C. In the first cycle, charging was performed using a constant current-constant voltage (CC-CV) method at a current density of 0.1C. The upper cutoff voltage was set to 3.7 V, and the end-of-charge current was set to 0.02C. Discharging was conducted using a constant current (CC) method at 0.1C, and the discharge cutoff voltage was set to 1.9 V. The charge capacity, discharge capacity, and efficiency were evaluated based on these measurements.

### (2) Evaluation of Cycle Life Characteristics

After one additional cycle using the same protocol as above, long-term cycle testing was carried out by increasing the current density to 0.5C. During charging at 0.5C using the CC-CV method, the cutoff voltage was set to 3.7 V, and the end-of-charge current was set to 0.1C. A rest time of 20 minutes was applied between the charge and discharge steps of each cycle. The DC-iR value was calculated as the voltage drop divided by the applied current, where the voltage drop was the difference between the open circuit voltage (OCV) measured after 20 minutes of rest following the completion of CC-CV charging at 3.7 V, and the initial voltage measured immediately after applying the discharge current.

**[Table 4]**

| | Initial | | | 30 cycle | | | |
|---|---|---|---|---|---|---|---|
| | Charging (mAh/g) | Discharging (mAh/g) | Efficiency (%) | Charging (mAh/g) | Discharging (mAh/g) | Efficiency (%) | Retention (%) |
| Example 1 | 222.1 | 206.0 | 92.8 | 181.0 | 180.8 | 99.9 | 98.3% |
| Comparati ve Example 1 | 217.2 | 194.8 | 89.7 | 136.4 | 135.9 | 99.6 | 89.4% |
| Comparati ve Example 2 | 209.6 | 188.7 | 90.0 | 140.0 | 139.2 | 99.4 | 86.0% |
| Comparati ve Example 3 | 224.5 | 191.5 | 85.3 | 112.6 | 112.3 | 99.8 | 70.2% |
| Comparati ve Example 4 | 209.8 | 186.7 | 90.0 | 110.0 | 105.1 | 95.5 | 65.1% |

It was confirmed that Example 1, in which the residual lithium content, the weight ratio of LiOH among the residual lithium, the fluidized bed coating method, and the Li:Zr molar ratio in the coating solution were all appropriately controlled, exhibited significantly superior electrochemical performance compared to Comparative Examples 1 to 3. Specifically, Example 1 showed excellent initial charge/discharge capacities, initial efficiency, charge/discharge capacities after 30 cycles, and capacity retention characteristics.

In contrast, Comparative Example 1 exhibited inferior initial charge/discharge capacities, initial efficiency, charge/discharge capacities after 30 cycles, and capacity retention characteristics due to the Li:Zr molar ratio in the coating solution being outside the optimal range. This is believed to be caused by the formation of a thick and non-uniform coating layer on the surface of the active material.

In the case of Comparative Example 2, where a vacuum drying method was used instead of a fluidized bed coating method, the initial charge/discharge capacities and capacity retention characteristics were inferior to those of Comparative Example 1.

Furthermore, in Comparative Example 3, where no coating layer was formed, the initial discharge capacity and initial efficiency of the battery were significantly reduced, and the charge/discharge capacity and capacity retention after 30 cycles were particularly poor.

Additionally, in Comparative Example 4, the initial charge/discharge capacities, initial efficiency, charge/discharge capacities after 30 cycles, efficiency, and retention characteristics were all inferior. This result is interpreted as being due to the use of a lithium transition metal oxide with a low residual lithium content, which led to the formation of a thick and non-uniform coating layer.

While the preferred embodiment of the present invention has been described above, it is not intended to limit the invention thereto. Various modifications and changes may be made within the scope of the detailed description, appended claims, and the accompanying drawings without departing from the spirit of the invention, and such modifications also fall within the scope of the present invention.
Accordingly, the scope of the present invention should be defined by the appended claims and equivalents thereof.

### [Description of Reference Numerals]

- 10:: Lithium nickel transition metal oxide
- 20:: Coating layer
- 100:: Positive electrode active material

## Claims

1. A positive electrode active material for an all-solid-state battery, comprising:
a layered lithium nickel-based transition metal oxide; and
a coating layer disposed on a surface of the lithium nickel-based transition metal oxide,
wherein the coating layer comprises a lithium zirconium composite oxide and is formed to have a uniform thickness of 5 nm or less over the entire surface of the lithium nickel-based transition metal oxide.

2. The positive electrode active material of claim 1,
wherein the positive electrode active material is a secondary particle formed by aggregation of a plurality of primary particles.

3. The positive electrode active material of claim 1,
wherein a nickel content of the lithium nickel-based transition metal oxide is 80 mol% or more based on the total moles of transition metals excluding lithium.

4. The positive electrode active material of claim 1,
wherein the lithium nickel-based transition metal oxide is represented by Chemical Formula 1:
[Chemical Formula 1] Liₐ[Ni_{b}M_{1-b}]O₂
wherein 0.8 ≤ a ≤ 1.2, 0.80 ≤ b < 1, and M is selected from Mn, Co, Al, Mg, Ti, Nb, W, Sc, Zr, Si, V, Fe, Y, Mo, or combinations thereof.

5. The positive electrode active material of claim 1,
wherein the lithium zirconium composite oxide is represented by Chemical Formula 2:
[Chemical Formula 2] LiₓZr_{y}O_{z}
wherein 0 < x ≤ 3, 0 < y ≤ 2, and 0 < z ≤ 4.

6. The positive electrode active material of claim 1,
wherein the lithium zirconium composite oxide is Li₂ZrO₃.

7. The positive electrode active material of claim 1,
wherein the content of the coating layer is from 0.1 wt% to 1.0 wt% based on the total weight of the lithium nickel-based transition metal oxide.

8. The positive electrode active material of claim 1,
wherein an average particle diameter (D50) of the secondary particle is from 3 µm to 10 µm.

9. A method for manufacturing a positive electrode active material for an all-solid-state battery, comprising:
preparing a transition metal hydroxide containing nickel;
forming a mixture comprising the transition metal hydroxide and a lithium raw material;
calcining the mixture to form a lithium nickel-based transition metal oxide having a high surface residual lithium concentration;
preparing a coating solution containing lithium ions and zirconium ions;
spraying the coating solution onto the lithium nickel-based transition metal oxide; and
heat-treating the lithium nickel-based transition metal oxide sprayed with the coating solution to form a coating layer,
wherein a molar ratio of lithium ions to zirconium ions in the coating solution is less than 2, and the formed coating layer has a thickness of 5 nm or less.

10. The method of claim 9,
wherein the surface residual lithium concentration of the lithium nickel-based transition metal oxide is 8,000 ppm or more.

11. The method of claim 9,
wherein a concentration of LiOH in the residual lithium is 6,500 ppm or more.

12. The method of claim 9,
wherein the residual lithium comprises LiOH and Li₂CO₃, and an amount of LiOH is 80 wt% or more based on the total residual lithium.

13. The method of claim 9,
wherein the calcining is performed at a temperature ranging from 700°C to 750°C.

14. The method of claim 9,
wherein the calcining is performed under an oxygen atmosphere having a concentration of 99% or more.

15. The method of claim 9,
wherein the molar ratio of lithium ions to zirconium ions in the step of preparing the coating solution is 1.8 or less.

16. The method of claim 9,
wherein an amount of the sprayed coating solution is from 20 wt% to 40 wt% based on the total weight of the lithium nickel-based transition metal oxide.

17. The method of claim 9,
wherein a spraying rate of the coating solution is from 3 g/min to 15 g/min.

18. The method of claim 9,
wherein the heat treatment for forming the coating layer is performed at a temperature ranging from 250°C to 350°C.

19. The method of claim 9,
wherein the heat treatment for forming the coating layer is performed for a duration of 1 hour to 3 hours.

20. A positive electrode comprising the positive electrode active material of any one of claims 1 to 8.

21. An all-solid-state battery comprising a positive electrode, a negative electrode, and a solid electrolyte layer disposed between the positive electrode and the negative electrode,
wherein the positive electrode comprises the positive electrode active material of any one of claims 1 to 8.
